# EUROPEAN PATENT APPLICATION

(11) **EP 3 435 527 A1**
(43) Date of publication of application: **30.01.2019**
(21) Application number: 17769953.5
(22) Date of filing: 09.03.2017
(51) Int. Cl.: H02K 7/06, F16D 65/18, F16H 25/20

(54) **ELECTRICALLY DRIVEN ACTUATOR**

(30) Priority: 25.03.2016 JP 2016061626
(71) Applicant: NTN Corporation, Osaka-shi, Osaka 550-0003 (JP)
(72) Inventor: MATSUTO Takushi, Iwata-shi Shizuoka 438-8510 (JP); IKEDA Yoshinori, Iwata-shi Shizuoka 438-8510 (JP); NAITOU Yuuki, Iwata-shi Shizuoka 438-8510 (JP)
(74) Representative: Grünecker Patent- und Rechtsanwälte PartG mbB
(86) International application number: PCT/JP2017/009524
(87) International publication number: WO 2017/163908

(57) **Abstract**

An electric actuator (1) includes a housing (2) configured to accommodate and hold a motor part (A) and a motion conversion mechanism part (B). The motion conversion mechanism part (B) includes: a screw shaft (33) arranged coaxially with a rotation center of a rotor (24); and a nut member (32) rotatably fitted to an outer periphery of the screw shaft. An operation part (D) mounted to the screw shaft (33) is configured to operate an object to be operated in an axial direction through a linear motion of the screw shaft (33) in the axial direction along with a rotation of the nut member (32). A terminal part (D) (terminal main body (50)) configured to hold an electrical component includes a tubular portion (50A) sandwiched by members forming the housing (2) from both sides in the axial direction, and has an opening portion (50c) formed in in the tubular portion (50A) and configured to cause an inside and an outside of the housing (2) to communicate with each other. The screw shaft (33) is formed into a hollow shape having a through hole (33c) extending in the axial direction.

## Description

### Technical Field

The present invention relates to an electric actuator.

### Background Art

In recent years, electrification of automobiles has been promoted for power saving and reduction in fuel consumption. For example, a system for operating an automatic transmission, a brake, and a steering wheel of an automobile with use of power of an electric motor (motor) has been developed and brought to the market. As an electric actuator for use in such a system, there has been known an electric actuator employing a screw device (ball screw device) as a motion conversion mechanism configured to convert a rotary motion of a motor into a linear motion to output the motion (for example, see Patent Literature 1). In this case, a screw shaft of the ball screw device forms an output member of the electric actuator.

### Citation List

Patent Literature 1: JP 2015-104231 A

### Summary of Invention

### Technical Problem

Incidentally, it is considered to mount the electric actuator to a device (system) such as a DCT, which is a type of the automatic transmission, in which two objects to be operated are coaxially arranged, or the electric actuator is actually mounted to such a device. However, when the electric actuators of Patent Literature 1 are mounted on such a device described above, the two actuators need to be independently arranged, and a form of coupling between the output member of each of the actuators and each of the objects to be operated needs to be devised, with the result that complexity and a size of the entire device may increase. Thus, for example, when an electric actuator having two output members independently operable and coaxially arranged can be achieved, it is conceivable that the above-mentioned problem can be solved as much as possible. However, even when such an electric actuator can be achieved, low ease of assembly (productivity) and a problem in production cost resulting therefrom may cause difficulty in wide use of such an electric actuator.

The present invention has been made in view of the above-mentioned problem, and therefore has a main object to provide an electric actuator capable of independently operating a plurality of objects to be operated (in particular, objects to be operated that are coaxially arranged), and excellent in ease of assembly.

### Solution to Problem

The present invention has been made in order to solve the above-mentioned problem, and according to one embodiment of the present invention, there is provided an electric actuator, comprising: a motor part configured to drive upon receiving supply of power; a motion conversion mechanism part configured to convert a rotary motion of the motor part into a linear motion to output the linear motion; and a housing configured to accommodate the motor part and the motion conversion mechanism part, wherein the motion conversion mechanism part comprises: a screw shaft arranged coaxially with a rotation center of a rotor of the motor part; and a nut member rotatably fitted to an outer periphery of the screw shaft, wherein an operation part mounted to the screw shaft is configured to operate an object to be operated in an axial direction through a linear motion of the screw shaft in the axial direction along with a rotation of the nut member upon receiving a rotary motion of the rotor, wherein the housing comprises a plurality of members coupled to one another in the axial direction, wherein a terminal part configured to hold an electrical component comprises a tubular portion sandwiched by the members forming the housing from both sides in the axial direction, and has an opening portion formed in the tubular portion and configured to cause an inside and an outside of the housing to communicate with each other, and in which the screw shaft is formed into a hollow shape having a through hole extending in the axial direction. The "electrical component" mentioned in the present invention is a concept including, for example, a power supply circuit configured to supply drive power to the motor part and a rotation angle detection sensor used to control a rotation of the motor part.

With the above-mentioned configuration, the through hole formed in the screw shaft in the axial direction can be used as a portion that allows arrangement (insertion) of an operation part mounted to another screw shaft. Therefore, for example, in a case in which two actuator units each comprising the motor part, the motion conversion mechanism part, and the terminal part are arrayed in the axial direction and are coaxially arranged, an electric actuator, which is compact while having two output members (operation parts) independently operable and coaxially arranged, can be achieved through mounting the hollow operation part to the screw shaft of one actuator unit, and inserting the operation part mounted to the screw shaft of another actuator unit through the through hole of the screw shaft (and the operation part). An electric actuator in which three or more output members (operation parts) are independently operable and coaxially arranged can be achieved in the same manner.

Moreover, with the above-mentioned configuration, the motor part can be brought into an operable state through coupling the members forming the housing to one another in the axial direction so as to assemble the housing. In particular, when an opening portion configured to cause an inside and an outside of the housing to communicate with each other is formed in a tubular portion of the terminal part, electric wires connected to the electric components can be drawn out to a radially outer side of the housing through the opening portion. In this case, a routing operation of the electric wires can be completed under a state in which the terminal part exists alone. Thus, the complex routing operation of the electric wires does not need to be carried out in an assembly stage of the electric actuator. Therefore, even in an electric actuator in which two or more output members are independently operable and coaxially arranged, the ease of assembly and the productivity can be increased, and the cost thereof can thus be reduced.

At least a part of a stator of the motor part may be fitted to the tubular portion of the terminal part. With such a configuration, the stator of the motor part can be assembled to the inner periphery of the housing simultaneously with the assembly of the housing, and the ease of assembly of the electric actuator can further be increased.

The rotor of the motor may comprise a hollow rotary shaft, which has the nut member arranged on an inner periphery thereof, and is supported rotatably by rolling bearings arranged at two positions apart from each other in the axial direction. In this case, the hollow rotary shaft may comprise an inner raceway surface of one of the two rolling bearings. With such a configuration, the hollow rotary shaft and the housing can be downsized in the axial direction. As a result, an electric actuator downsized in the axial direction, and excellent in mountability with respect to a device to be used can be achieved.

In a case in which the inner raceway surface is formed on the hollow rotary shaft, when the inner raceway surface is arranged within an axial width of the nut member, the electric actuator can be further downsized in the axial direction.

The motion conversion mechanism part may comprise a speed reducer configured to reduce a speed of the rotation of the rotor, and transmit the rotation to the nut member. With such a configuration, a small motor can be employed, and the weight and the size of the electric actuator can thus be reduced. A planetary gear speed reducer can be employed as the speed reducer. When the planetary gear speed reducer is employed, a speed reduction ratio can easily be adjusted through, for example, changing specifications of the gears or changing the number of stages of the installed planetary gears. Further, there is also an advantage in that, even when the planetary gears are installed in a large number of stages, an increase in sizes of the speed reducer and the electric actuator can be avoided.

### Advantageous Effects of Invention

As described above, according to the present invention, there can be achieved an electric actuator capable of independently operating a plurality of objects to be operated, and excellent in ease of assembly.

### Description of Drawings

FIG. 1 is a vertical sectional view for illustrating an electric actuator according to one embodiment of the present invention.
FIG. 2 is a partially enlarged view of FIG. 1.
FIG. 3 is a sectional view as seen from a direction indicated by the arrows of the line E-E in FIG. 2.
FIG. 4 is an enlarged vertical sectional view for illustrating a rotor of a motor and a motion conversion mechanism part.
FIG. 5 is a sectional view as seen from a direction indicated by the arrows of the line F-F in FIG 2.
FIG 6 is an enlarged vertical sectional view for illustrating a stator of the motor and a terminal part.
FIG. 7 is a sectional view as seen from a direction indicated by the arrows of the line G-G in FIG. 2.
FIG 8 is a sectional view as seen from a direction indicated by the arrows of the line H-H in FIG. 2.
FIG. 9 is a vertical sectional view for illustrating a state in which a ring gear is assembled to a casing.
FIG. 10A is a left side view (plan view of a cover) of the electric actuator illustrated in FIG 1.
FIG. 10B is a sectional view as seen from a direction indicated by the arrows of the line I-I in FIG 10A.
FIG. 11 is a schematic block diagram for illustrating a control system for the electric actuator of FIG. 1.
FIG. 12 is a partially enlarged vertical sectional view for illustrating an electric actuator according to another embodiment of the present invention.

### Description of Embodiments

Now, description is made of embodiments of the present invention with reference to the drawings.

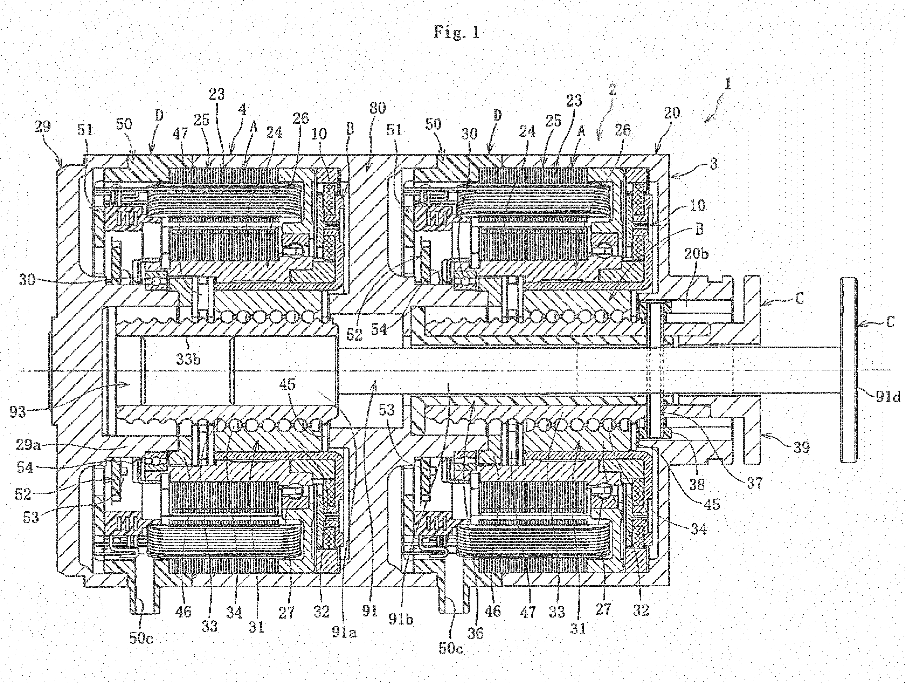

FIG. 1 is a vertical sectional view of an electric actuator according to one embodiment of the present invention. As illustrated in FIG. 1, an electric actuator 1 of this embodiment comprises first and second actuator units 3 and 4 arrayed in an axial direction (arranged coaxially), and a housing 2 configured to accommodate/hold both the actuator units 3 and 4. Each of the first and second actuator units 3 and 4 comprises a motor part A, a motion conversion mechanism part B, an operation part C, and a terminal part D. The motor part A is configured to be driven upon receiving supply of power. The motion conversion mechanism part B is configured to convert a rotary motion of the motor part A into a linear motion to output the motion. The operation part C is configured to operate an object to be operated (not shown) in the axial direction.

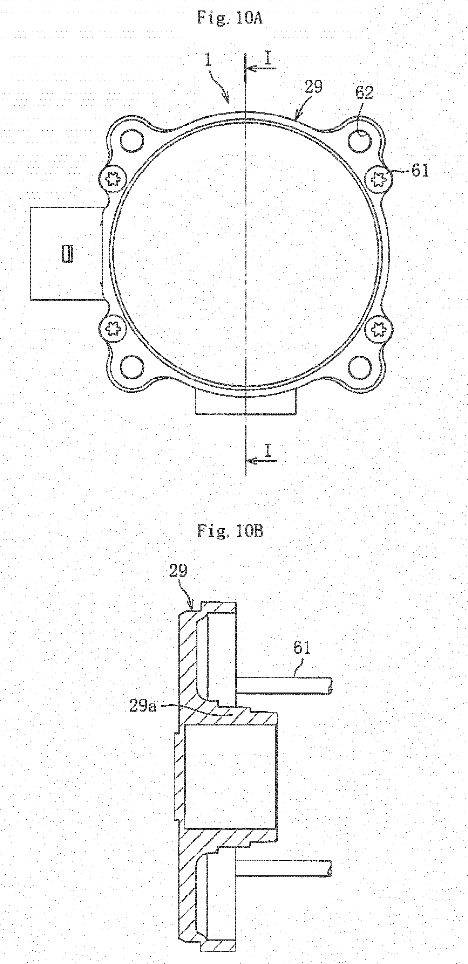

The housing 2 is formed of a plurality of members coupled in the axial direction under a state in which the members are coaxially arranged. The housing 2 of this embodiment is formed of a coupled body comprising a casing 20, a cover 29, an intermediate casing 80, and the terminal parts D (terminal main bodies 50). The casing 20 is arranged on one side in the axial direction (right side of the drawing sheet in FIG 1; the same applies to the following.). The cover 29 is arranged in an end portion on another side in the axial direction (left side of the drawing sheet in FIG. 1; the same applies to the following). The intermediate casing 80 is arranged between the casing 20 and the cover 29. The terminal parts D are arranged respectively between the casing 20 and the intermediate casing 80 and between the intermediate casing 80 and the cover 29. The cover 29, the intermediate casing 80, and the two terminal main bodies 50 are mounted and fixed to the casing 20 by assembly bolts 61 illustrated in FIG. 10A and FIG. 10B. Thus, the terminal main body 50 of the first actuator unit 3 is sandwiched between the casing 20 and the intermediate casing 80 arranged on both sides in the axial direction thereof. The terminal main body 50 of the second actuator unit 4 is sandwiched between the intermediate casing 80 and the cover 29 arranged on both sides in the axial direction thereof.

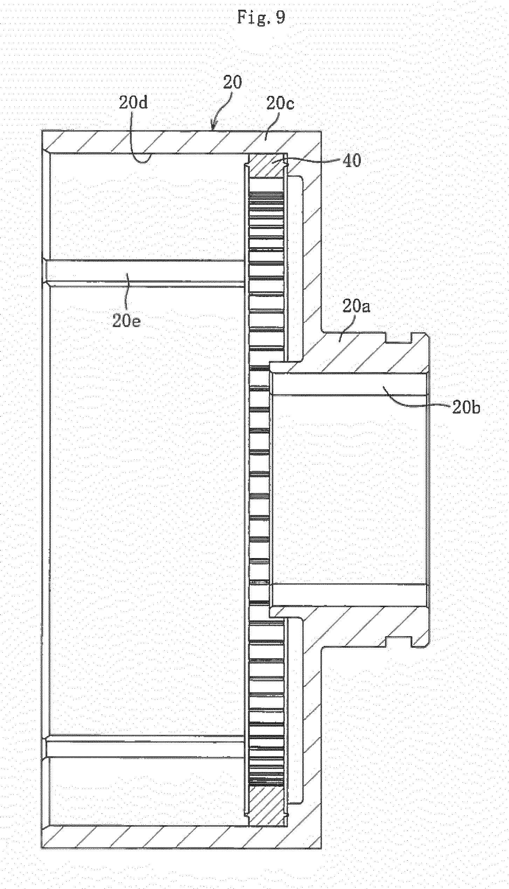

As illustrated in an enlarged form in FIG. 9, the casing 20 is formed into a stepped cylindrical shape integrally comprising a small-diameter cylindrical portion 20a and a large-diameter cylindrical portion 20c, and is made of a metal material excellent in ease of processing (capability of mass production) and thermal conductivity, such as an aluminum alloy, a zinc alloy, or a magnesium alloy.

As illustrated in FIG. 1, FIG. 10A, and FIG. 10B, the cover 29 has a bottomed tubular shape, and integrally comprises a cylindrical portion 29a formed to protrude to the one side in the axial direction. Although not shown, a cooling fin configured to increase cooling efficiency of the electric actuator 1 may be provided on an outer end surface of the cover 29. Moreover, the cover 29 has through holes (not shown) into which the assembly bolts 61 of the electric actuator 1 are inserted, and through holes 62 into which mounting bolts for mounting the electric actuator 1 to a device to be used are inserted. The cover 29 having the above-mentioned configuration is, similarly to the casing 20, made of a metal material excellent in ease of processing (capability of mass production) and thermal conductivity, such as an aluminum alloy, a zinc alloy, or a magnesium alloy.

As illustrated in FIG. 1, the intermediate casing 80 has such a shape that a portion corresponding to the cover 29 and a portion corresponding to the large-diameter cylindrical portion 20c of the casing 20 are integrally formed. The intermediate casing 80 is, similarly to the casing 20 and the cover 29, made of a metal material excellent in ease of processing (capability of mass production) and thermal conductivity, such as an aluminum alloy, a zinc alloy, or a magnesium alloy.

Description is now made of detailed structures of the motor part A, the motion conversion mechanism part B, and the terminal part D. The first and second actuator units 3 and 4 have basically the same structures in the motor part A, the motion conversion mechanism part B, and the terminal part D except that output members are different from each other in configuration. Therefore, hereinafter, the motor part A and the like forming the first actuator unit 3 are is described in detail, and detailed description of the motor part A and the like forming the second actuator unit 4 is basically omitted.

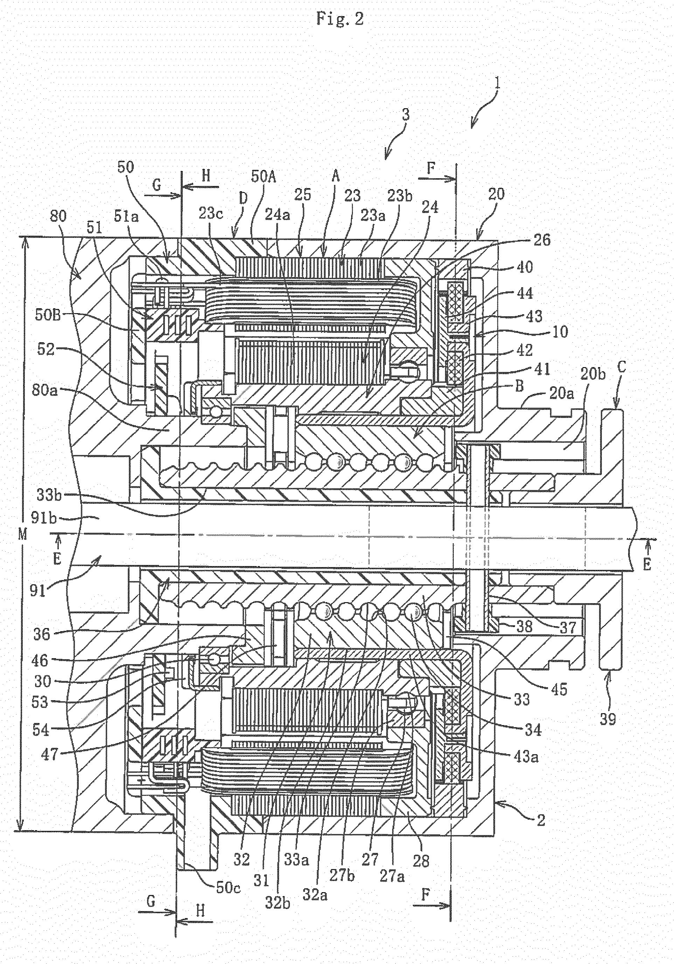

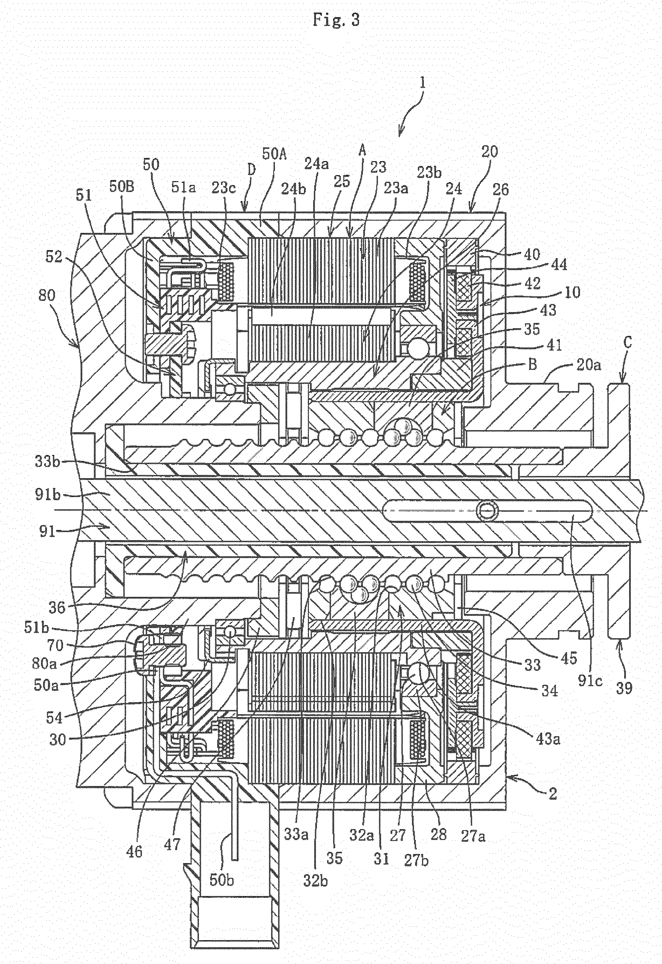

As illustrated in FIG 2 and FIG. 3, the motor part A is formed of a motor 25 of a radial gap type (specifically, a three-phase brushless motor having a U-phase, a V-phase, and a W-phase) comprising a stator 23 fixed to an inner periphery of the housing 2 and a rotor 24 arranged so as to be opposed to an inner periphery of the stator 23 through a radial gap. The stator 23 comprises a bobbin 23b and a coil 23c. The bobbin 23b for insulation is mounted to a stator core 23a. The coil 23c is wound around the bobbin 23b. The rotor 24 comprises a rotor core 24a, a rotor magnet 24b mounted to an outer periphery of the rotor core 24a, and a rotor inner 26 being a hollow rotary shaft having the rotor core 24a mounted to an outer periphery thereof.

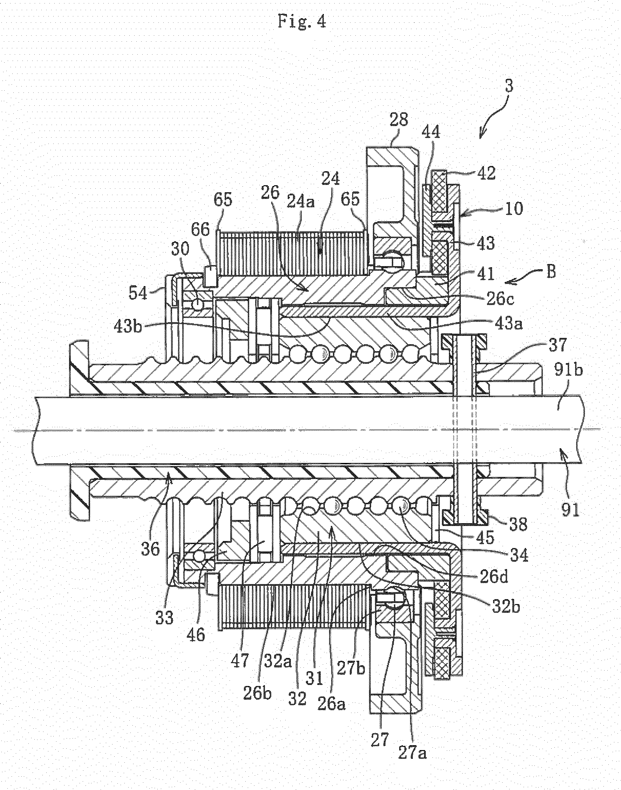

As illustrated in FIG. 4, after a side plate 65 is set on a shoulder portion 26a of the rotor inner 26 on the one side in the axial direction, the rotor core 24a is fitted to an outer peripheral surface 26b of the rotor inner 26. After the rotor magnet 24b (see FIG 3) is fitted to the outer periphery of the rotor core 24a, the rotor magnet 24b is positioned and fixed by the side plate 65, which is mounted to the rotor inner 26 on an outer side in the axial direction of the end portion of the rotor core 24a on the another side in the axial direction, and by a circlip 66 mounted on an outer side of the side plate 65 in the axial direction.

As illustrated in FIG. 2 to FIG 4, on an outer periphery of the end portion of the rotor inner 26 on the one side in the axial direction, an inner raceway surface 27a of a rolling bearing 27 is formed. An outer ring 27b of the rolling bearing 27 is mounted to an inner peripheral surface of a bearing holder 28 fixed to an inner periphery of the housing 2. An outer ring of a rolling bearing 30 having an inner ring mounted to the housing 2 is mounted to an inner periphery of an end portion of the rotor inner 26 on the another side in the axial direction. With such a configuration, the rotor inner 26 is supported so as to be rotatable with respect to the housing 2 through the rolling bearings 27 and 30.

As illustrated in FIG. 1 to FIG. 4, the motion conversion mechanism part B comprises a ball screw device 31 and a planetary gear speed reducer 10 being a speed reducer. The planetary gear speed reducer 10 is arranged adjacent to the one side in the axial direction of the motor part A.

The ball screw device 31 comprises a screw shaft 33, a nut member 32, and deflectors 35. The screw shaft 33 is arranged coaxially with a rotation center of the rotor 24. The nut member 32 is rotatably fitted to an outer periphery of the screw shaft 33 through intermediation of a plurality of balls 34, and is arranged on an inner periphery of the rotor inner 26. The deflectors 35 serve as circulation members. The screw shaft 33 is formed into a hollow shape having a through hole 33b opened in both end surfaces in the axial direction. Between a spiral groove 32a formed in an inner peripheral surface of the nut member 32 and a spiral groove 33a formed in an outer peripheral surface of the screw shaft 33, the plurality of balls 34 are loaded, and the deflectors 35 are incorporated. With such a configuration, when the screw shaft 33 performs a linear motion in the axial direction along with the rotation of the nut member 32, the balls 34 circulate between the spiral grooves 32a and 33a.

In the first actuator unit 3, the output member thereof comprises the screw shaft 33, a hollow inner member 36, and an actuator head 39. The inner member 36 is accommodated in the through hole 33b of the screw shaft 33. The actuator head 39 serving as the operation part C is formed into a hollow shape having a through hole in the axial direction, and is removably fixed to an end portion of the screw shaft 33 on the one side in the axial direction.

As illustrated in FIG. 1, in the second actuator unit 4, the output member thereof comprises the screw shaft 33, a flanged lid member 93, and the operation part C. The flanged lid member 93 is fixed to an end portion of the screw shaft 33 on the another side in the axial direction. The operation part C is removably fixed to an end portion of the screw shaft 33 on the one side in the axial direction. This operation part C is formed of a flanged shaft member 91 comprising a large-diameter shaft portion 91a, a small-diameter shaft portion 91b, and a flange portion 91d. The large-diameter shaft portion 91a is fitted and fixed to the through hole 33b of the screw shaft 33. The flange portion 91d is formed on an end portion of the small-diameter shaft portion 91b on the one side in the axial direction. The flange portion 91d may be formed independently of the small-diameter shaft portion 91b.

The small-diameter shaft portion 91b is arranged on inner peripheries of the hollow screw shaft 33 (inner member 36) and the actuator head 39 forming the first actuator unit 3. As illustrated in FIG. 3, the small-diameter shaft portion 91b has a through hole 91c in an oblong hole shape opening in an outer peripheral surface thereof at two positions apart from one another in a circumferential direction. Further, a pin 37 fitted so as to pass through the screw shaft 33 and the inner member 36 of the first actuator unit 3 in a radial direction is inserted into the through hole 91c of the shaft member 91. Guide collars 38 are externally fitted to both end portions of the pin 37 so as to be rotatable. The guide collars 38 are fitted to guide grooves 20b in the axial direction formed in an inner peripheral surface of the small-diameter cylindrical portion 20a of the casing 20. With the above-mentioned configuration, in the first actuator unit 3, when the nut member 32 rotates about the axis of the screw shaft 33 upon receiving the rotary motion of the rotor 24, the output member comprising the screw shaft 33 and the actuator head 39 performs a linear motion in the axial direction while being stopped in rotation. Moreover, in the second actuator unit 4, when the nut member 32 rotates about the axis of the screw shaft 33 upon receiving the rotary motion of the rotor 24, the output member comprising the screw shaft 33 and the flanged shaft member91 performs a linear motion in the axial direction while being stopped in rotation.

As illustrated in FIG. 2 to FIG. 5, the planetary gear speed reducer 10 comprises a ring gear 40, a sun gear 41, a plurality of (four in this embodiment) planetary gears 42, a planetary gear carrier 43, and planetary gear holders 44. The ring gear 40 is fixed to the housing 2. The sun gear 41 is press-fitted and fixed to a step-portion inner peripheral surface 26c of the rotor inner 26. The planetary gears 42 are arranged between the ring gear 40 and the sun gear 41, and mesh with both the gears 40 and 41. The planetary gear carrier 43 and the planetary gear holders 44 rotatably hold the planetary gears 42. The planetary gear carrier 43 is configured to extract a revolving motion of the planetary gears 42 to output the motion. Thus, the planetary gear carrier 43 forms an output member of the planetary gear speed reducer 10.

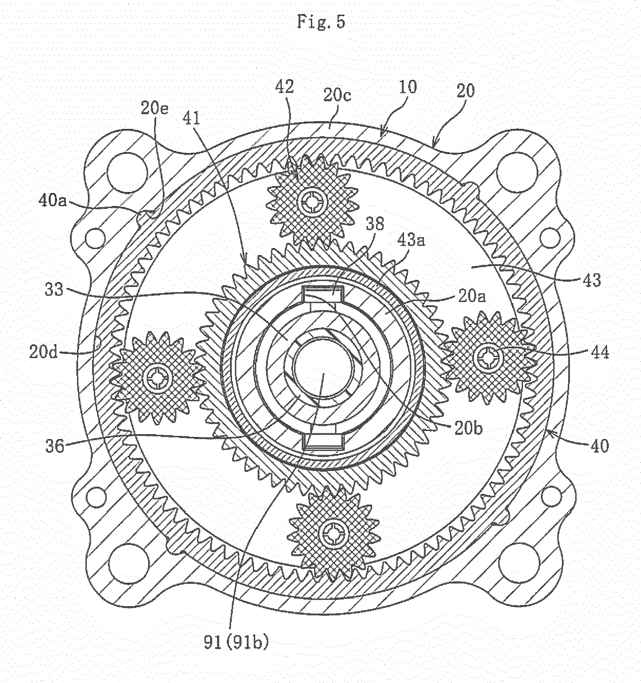

As illustrated in FIG. 5, notches 40a which project radially outward are formed on an outer periphery of the ring gear 40 at a plurality of positions (four positions in the illustrated example) apart from one another in the circumferential direction. The notches 40a are fitted to axial grooves 20e (also see FIG. 9) formed in an inner peripheral surface of the housing 2 (inner peripheral surface 20d of the large-diameter cylindrical portion 20c of the casing 20 in the illustrated example) at a plurality of positions (four positions in the illustrated example) apart from one another in the circumferential direction. With this configuration, the ring gear 40 is stopped in rotation with respect to the housing 2.

As illustrated in FIG. 2 to FIG. 4, the planetary gear carrier 43 integrally comprises pin-shaped portions, a disc-shaped portion, and a cylindrical portion 43a. The pin-shaped portions are respectively fitted to inner peripheries of the planetary gears 42. The disc-shaped portion is arranged on the one side in the axial direction of the planetary gears 42. The cylindrical portion 43a extends from an end portion on a radially inner side of the disc-shaped portion toward the another side in the axial direction, and is interposed between an inner peripheral surface 26d of the rotor inner 26 and an outer peripheral surface 32b of the nut member 32. The planetary gear carrier 43 can rotate relative to the rotor inner 26, and is coupled to the nut member 32 of the ball screw device 31 so as to be integrally rotatable. In this embodiment, an outer peripheral surface of the cylindrical portion 43a is opposed to the inner peripheral surface 26d of the rotor inner 26 (and an inner peripheral surface of the sun gear 41) through a radial gap, and an inner peripheral surface of the cylindrical portion 43a is press-fitted and fixed to the outer peripheral surface 32b of the nut member 32.

When the planetary gear carrier 43 and the nut member 32 are coupled to each other in a torque transmittable manner through the press-fitting of the inner peripheral surface of the cylindrical portion 43a to the outer peripheral surface 32b of the nut member 32 in this way, ease of coupling operation at the time of assembly is excellent, and stable torque transmission can be performed with respect to high torque after reduction in speed. Moreover, the rotor inner 26 and the sun gear 41 are coupled to each other in a torque transmittable manner through the press-fitting of the sun gear 41 to the step-portion inner peripheral surface 26c of the rotor inner 26. Thus, the ease of coupling operation at the time of assembly is excellent also in terms of this point. Even when such a coupling structure is employed, the sun gear 41 is only required to rotate together with the rotor inner 26 before reduction in speed, and hence the torque transmission performance required between the sun gear 41 and the rotor inner 26 can be sufficiently secured. Further, the rotor inner 26 and the sun gear 41 are coupled to each other at a position directly below the rolling bearing 27 configured to support the rotor inner 26. Thus, the rotation accuracy of the sun gear 41 is also excellent.

With the planetary gear speed reducer 10 having the configuration described above, the rotary motion of the rotor 24 (rotor inner 26) of the motor 25 is reduced in speed and transmitted to the nut member 32. With this action, rotation torque can be increased. Thus, the motor 25 having a small size can be employed.

As illustrated in FIG. 1 to FIG. 4, a thrust washer 45 is arranged adjacent to the nut member 32 on the one side in the axial direction, and a needle roller bearing 47 serving as a thrust bearing is arranged adjacent to the nut member 32 on the another side in the axial direction. A thrust receiving ring 46 is arranged adjacent to the needle roller bearing 47 on the another side in the axial direction. The thrust receiving ring 46 is mounted to an outer periphery of a distal end portion of a cylindrical portion 80a of the intermediate casing 80 in the first actuator unit 3. The thrust receiving ring 46 is mounted to an outer periphery of a distal end portion of the cylindrical portion 29a of the cover 29 in the second actuator unit 4.

Next, with reference to FIG. 2 and FIG 3 and FIG. 6 to FIG. 8, description is made of the terminal part D. As illustrated in FIG. 2, FIG. 3, and FIG. 6, the terminal part D comprises the terminal main body 50, a bus bar 51, and a disc-shaped print board 52. The terminal main body 50 integrally comprises a tubular portion 50A and a disc-shaped portion 50B. The tubular portion 50A forms a part of the housing 2. The disc-shaped portion 50B extends radially inward from an end portion of the tubular portion 50A on the another side in the axial direction. The bus bar 51 and the print board 52 are fixed by screws to (the disc-shaped portion 50B of) the terminal main body 50. The terminal main body 50 is made of a resin material such as PPS.

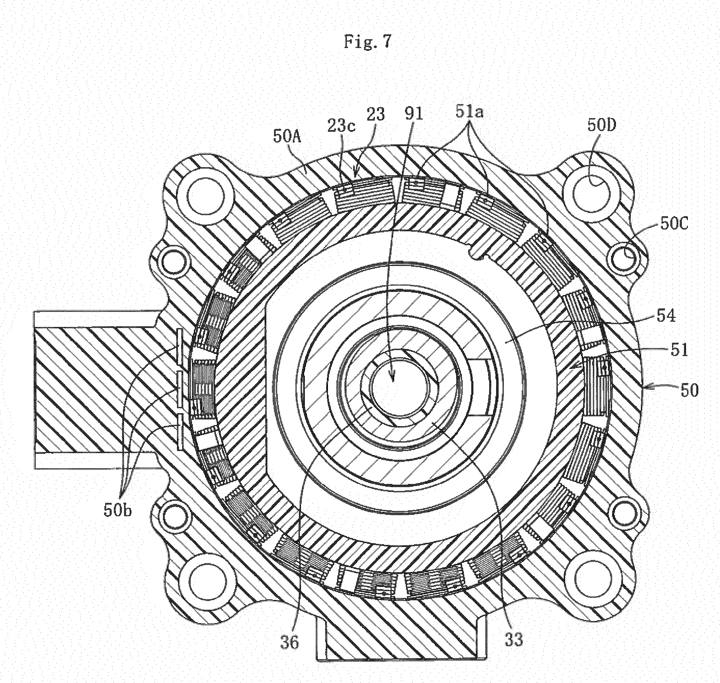

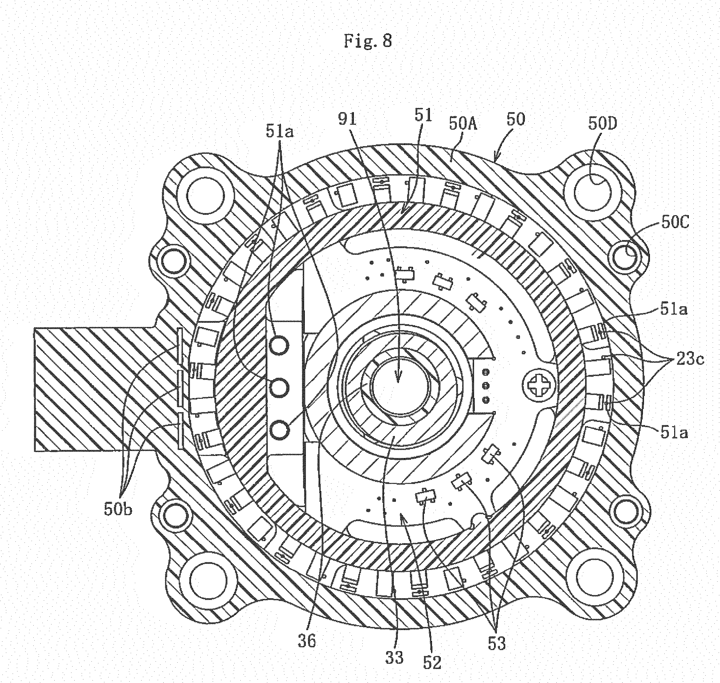

As illustrated in FIG 7 and FIG. 8, (the tubular portion 50A of) the terminal main body 50 has through holes 50C into which the assembly bolts 61 illustrated in FIG 10A and FIG 10B are inserted and through holes 50D into which bolts for mounting the electric actuator 1 to a device to be used are inserted. Further, the terminal main body 50 of the first actuator unit 3 is sandwiched between the casing 20 and the intermediate casing 80 by the assembly bolts 61 (see FIG 1 and FIG. 2). Moreover, the terminal main body 50 of the second actuator unit 4 is sandwiched between the intermediate casing 80 and the cover 29 by the assembly bolts 61 (see FIG. 1).

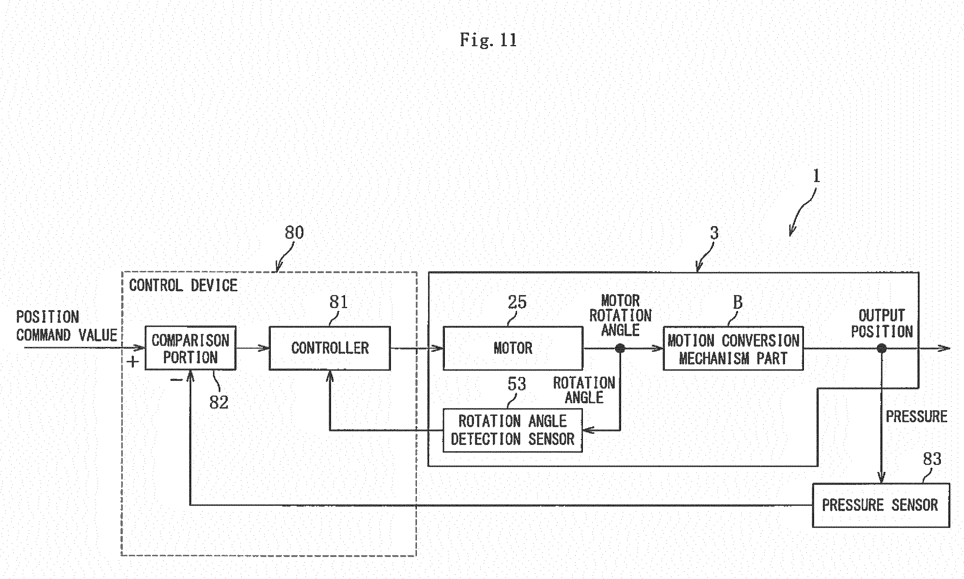

The terminal part D (terminal main body 50) holds an electrical component such as a power supply circuit for supplying drive power to the motor 25. The power supply circuit is formed by connecting the coil 23c of the stator 23 to terminals 51a of the bus bar 51 for respective phases of a U-phase, a V-phase, and a W-phase as illustrated in FIG 7 and FIG. 8, and fastening a terminal 51b of the bus bar 51 and a terminal base 50a of the terminal main body 50 with each other by a screw 70 as illustrated in FIG. 3. The terminal base 50a comprises a terminal 50b to which a lead line (not shown) is connected, and the lead line is drawn out to a radially outer side of the housing 2 through an opening portion 50c (see FIG. 1 and FIG. 2) formed in the tubular portion 50A of the terminal main body 50, and is connected to a controller 81 of a control device 80 (see FIG. 11).

As illustrated in FIG. 1, FIG. 2, and FIG. 8, the terminal parts D (terminal main bodies 50) of this embodiment also hold rotation angle detection sensors 53 for use in rotation control of the motors 25. The rotation angle detection sensor 53 is mounted to the print board 52, and is arranged so as to be opposed to a pulser ring 54, which is mounted to an end portion of the rotor inner 26 on the another side in the axial direction, through an axial gap. The rotation angle detection sensor 53 is configured to determine timings of causing an electric current to flow through the U-phase, the V-phase, and the W-phase of the motor 25, and, for example, a Hall sensor being one type of magnetic sensors is used. Although detailed illustration is omitted, similarly to the above-mentioned lead line, a signal line of each of the rotation angle detection sensors 53 is drawn out to the radially outer side of the housing 2 through the opening portion 50c (see FIG. 1 and FIG. 2) of the terminal main body 50, and is connected to the controller 81 of the control device 80 (see FIG 11).

A procedure of assembling the electric actuator 1 having the above-mentioned configuration is briefly described. First, the ring gear 40 of the first actuator unit 3 is assembled to the casing 20 (see FIG. 9). Moreover, the ring gear 40 of the second actuator unit 4 is assembled to the intermediate casing 80.

Then, a subassembly (see FIG. 4) comprising the rotor 24 and the motion conversion mechanism part B of the first actuator unit 3 and the operation part C (flanged shaft member 91) of the second actuator unit 4 is inserted into the casing 20. At this time, the planetary gears 42 are brought into mesh with the ring gear 40 fixed to the casing 20, and the guide collars 38 are fitted to the guide grooves 20b of the casing 20. Further, the bearing holder 28 is fitted to the inner peripheral surface 20d of the casing 20. Moreover, a subassembly (not shown) comprising the rotor 24 and the motion conversion mechanism part B of the second actuator unit 4 is inserted into the intermediate casing 80. At this time, the planetary gears 42 are brought into mesh with the ring gear 40 fixed to the intermediate casing 80, and the bearing holder 28 is fitted to the inner peripheral surface of the intermediate casing 80.

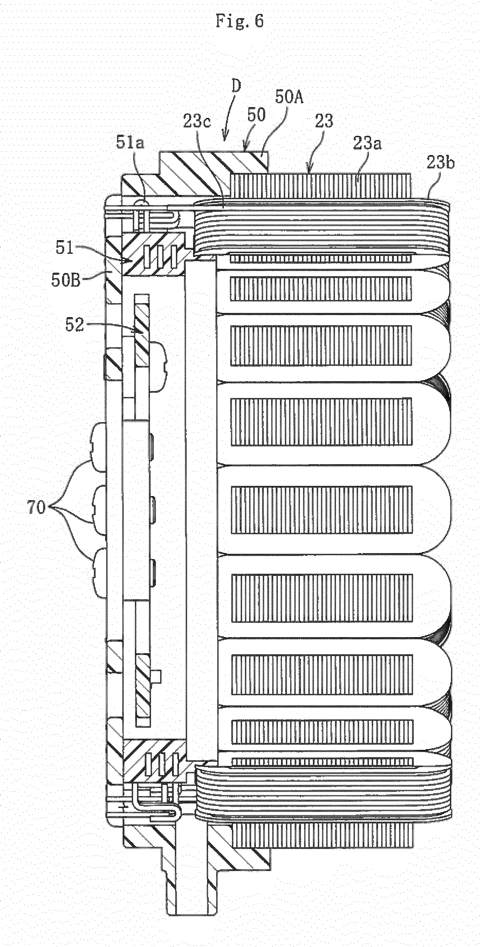

After that, of a subassembly (see FIG. 6) comprising the stator 23 and the terminal part D (terminal main body 50) of the first actuator unit 3, the stator 23 is fitted to the inner periphery of the casing 20, and, of a subassembly comprising the stator 23 and the terminal part D of the second actuator unit 4, the stator 23 is fitted to the inner periphery of the intermediate casing 80. At this time, the large-diameter shaft portion 91a of the flanged shaft member 91 is fitted to the inner periphery of the screw shaft 33 of the second actuator unit 4. Finally, the cover 29, the terminal main body 50 of the second actuator unit 4, the intermediate casing 80, and the terminal main body 50 of the first actuator unit 3 are fastened to the casing 20 by the assembly bolts 61 illustrated in FIG. 10A and the like. In such a manner, the electric actuator 1 is brought into completion.

In the electric actuator 1 (respective actuator units 3 and 4) described above, the screw shafts 33 of the ball screw devices 31 forming the output members are formed into the hollow shapes having the through holes 33b extending in the axial direction. With such a configuration, the through hole 33b formed in the screw shaft 33 can be used as the portion that allows insertion of the operation part C mounted to the another screw shaft. Therefore, as in the electric actuator 1, in a case in which the first and second actuator units 3 and 4 each comprising the motor part A, the motion conversion mechanism part B, and the terminal part D are arrayed in the axial direction and are coaxially arranged, the electric actuator 1, which is compact while having the two output members independently operable and coaxially arranged, can be achieved through mounting the hollow operation part D (actuator head 39) to the screw shaft 33 of the first actuator unit 3, and inserting the operation part D (small-diameter shaft portion 91b of the flanged shaft member 91) mounted to the screw shaft 33 of the second actuator unit 4 through the through hole of the screw shaft 33 (and the actuator head 39).

Moreover, the housing 2 of the electric actuator 1 comprises the plurality of members coupled in the axial direction, and the terminal parts D holding the electrical components such as the power supply circuits are sandwiched by the members forming the housing 2 from both sides in the axial direction. That is, the electric actuator 1 of this embodiment employs such a sandwich structure that the terminal main body 50 holding the electrical components for the first actuator unit 3 is sandwiched in the axial direction by the casing 29 and the intermediate casing 80, and the terminal main body 50 holding the electrical components for the second actuator unit 4 is sandwiched in the axial direction by the intermediate casing 80 and the cover 29. With such a configuration, the motor part A can be brought into an operable state through coupling the members forming the housing 2 to one another in the axial direction so as to assemble the housing 2.

In particular, when the opening portion 50c configured to cause the inside and the outside of the housing 2 to communicate with each other is formed in the tubular portion 50A of the terminal main body 50, the electric wires such as the lead line connected to the power supply circuit, and the signal line connected to the rotation angle detection sensor 53 can be drawn out to the radially outer side of the housing 2 through the opening portion 50c. In this case, a routing operation of the electric wires can be completed under a state in which the terminal part D exists alone. Thus, the complex routing operation of the electric wires does not need to be carried out in an assembly stage of the electric actuator 1 (housing 2). Therefore, even in the electric actuator 1 as that of this embodiment in which two output members are independently operable and coaxially arranged, the ease of assembly and the productivity can be increased, and the cost thereof can thus be reduced.

Moreover, in this embodiment, as illustrated in FIG. 1, FIG. 6, and the like, a part of the stator 23 of the motor 25 is fitted to the inner periphery of the tubular portion 50A of the terminal main body 50. In this case, the stator 23 can be assembled to the inner periphery of the housing 2 simultaneously with the assembly of the housing 2. Thus, the ease of assembly of the electric actuator 1 is further increased also in this respect.

Moreover, when the routing operation of the electric wires can be completed under the state in which the terminal main body 50 exists alone as described above, even when specifications of, for example, the motor 25 and the planetary gear speed reducer 10 are changed, the terminal main body 50 can be standardized as long as shapes of coupled portions of members (the casing 20 and the intermediate casing 80) to be coupled to the terminal main body 50 remain the same. With this, series production of various types of the electric actuator 1 with standardized components can easily be achieved.

Moreover, through a combination of the downsizing of the motor part A (motor 25) achieved by providing the planetary gear speed reducer 10 in the motion conversion mechanism part B and the overlap structure in the radial direction of the rotor inner 26, the cylindrical portion 43a of the planetary gear carrier 43, and the nut member 32, a radial dimension M (see FIG. 2) of the housing 2 can be reduced as much as possible.

Moreover, the rotor inner 26 serving as the hollow rotary shaft comprises the inner raceway surface 27a of the rolling bearing 27 arranged adjacent to the end portion of the rotor core 24a on the one side in the axial direction, and the end portion on the one side in the axial direction is supported by the rolling bearing 27 so as to be rotatable. With such a structure, the rotor inner 26 can be downsized in the axial direction. In addition, in combination with the structure in which the rolling bearing 27 is arranged within the axial width of the nut member 32, both the actuator units 3 and 4, and the electric actuator 1 can be further downsized in the axial direction. With such a configuration, there can be achieved the electric actuator 1 that is excellent in mountability with respect to a device to be used, and can also contribute to downsizing of the device to be used.

Further, as long as the rotation of the rotor 24 is balanced, it is only required that the rolling bearings 27 and 30 configured to support the rotor inner 26 be capable of supporting a radial load as small as the own weight of the rotor 24. In this case, it is not required that the rotor inner 26 integrally having the inner raceway surface 27a of the rolling bearing 27 be made of a material having a high strength. A required strength can be secured even when the rotor inner 26 is made of, for example, an inexpensive soft steel material for which thermal treatment such as quenching and tempering is omitted. In particular, in the electric actuator 1 (each of the actuator units 3 and 4) of this embodiment, the rotary motion of the motor 25 is transmitted to the nut member 32 through the planetary gear speed reducer 10. Thus, the radial load is not generated. Moreover, the reaction force (thrust load) generated along with the linear motion of the screw shaft 33 is directly supported by the needle roller bearing 47 arranged adjacent to the nut member 32 on the another side in the axial direction. Thus, it is only required that the rolling bearing 27 have a function of positioning in the radial direction, and hence the above-mentioned material specification is sufficient for the rotor inner 26 integrally having the inner raceway surface 27a of the rolling bearing 27. With this configuration, the electric actuator 1 can be reduced in cost.

Moreover, as described above, when the needle roller bearing 47 is configured to directly support the thrust load acting on the nut member 32, the action of the moment load on the ball screw device 31 (motion conversion mechanism part B) and on the rotor 24 of the motor 25 can be suppressed effectively. In particular, when the needle roller bearing 47 is arranged within the range in the axial direction between the rolling bearings 27 and 30 as in this embodiment, the effect of suppressing the moment load can be enhanced. When the moment load can be suppressed in this way, operation accuracy and durability life of the output member of the electric actuator 1 can be improved as well as the needle roller bearing 47 having a smaller size can be used.

The needle roller bearing 47 is arranged near a center portion in the axial direction between both of the rolling bearings 27 and 30 in this embodiment, and the effect of suppressing the moment load can thus be further enhanced in this case. Therefore, the downsizing of the needle roller bearing 47 can be further promoted. As a result, for example, the needle roller bearing 47 and the thrust receiving ring 46 having extremely small sizes can be employed. Consequently, the dimension in the axial direction of the electric actuator 1 can be prevented from increasing as much as possible.

Finally, of the electric actuator 1 having the above-mentioned configuration, an operation mode of the first actuator unit 3 is briefly described with reference to FIG. 2 and FIG 11. FIG. 11 is a diagram for illustrating an example of pressure control. A pressure sensor 83 is provided for an object to be operated (not shown). An operation mode of the second actuator unit 4 is basically the same as that of the first actuator unit 3, and description thereof is therefore omitted.

First, for example, when an operation amount is input to an ECU provided at an upper position of the vehicle (not shown), the ECU calculates a requested pressure command value based on the operation amount. The pressure command value is transmitted to the controller 81 of the control device 80, and the controller 81 calculates a control signal of a motor rotation angle required in accordance with the pressure command value, and transmits the control signal to the motor 25.

When the rotor 24 rotates based on the control signal transmitted from the controller 81, the rotary motion is transmitted to the motion conversion mechanism part B. Specifically, when the rotor 24 rotates, the sun gear 41 of the planetary gear speed reducer 10 coupled to the rotor inner 26 rotates. Along with this rotation, the planetary gears 42 revolve, and the planetary gear carrier 43 rotates. With this, the rotary motion of the rotor 24 is transmitted to the nut member 32 coupled to the cylindrical portion 43a of the planetary gear carrier 43. At this time, the revolving motion of the planetary gears 42 reduces the rotation number of the rotor 24, thereby increasing rotation torque transmitted to the nut member 32.

When the nut member 32 rotates upon receiving the rotary motion of the rotor 24, the screw shaft 33 performs the linear motion in the axial direction (advances toward the one side in the axial direction) while being stopped in rotation. At this time, the screw shaft 33 advances to a position based on the control signal of the controller 81, and the actuator head 39 fixed to the end portion of the screw shaft 33 on the one side in the axial direction operates an object to be operated (not shown).

An operation pressure of the screw shaft 33 (actuator head 39) is detected by the pressure sensor 83 installed outside, and a detection signal thereof is transmitted to a comparison portion 82 of the control device 80. Then, the comparison portion 82 calculates a difference between a detection value detected by the pressure sensor 83 and the pressure command value, and the controller 81 transmits a control signal to the motor 25 based on the calculated value and the signal transmitted from the rotation angle detection sensor 53. In such a manner, a position of the screw shaft 33 (actuator head 39) in the axial direction is subjected to feedback control. The power for driving the motor 25 and the sensor 53 is supplied from an external power supply (not shown), such as a battery provided on the vehicle, to the motor 25 through the control device 80 and the power supply circuit held by the terminal portion D.

In the above, description is made of the electric actuator 1 (actuator units 3 and 4) according to one embodiment of the present invention. However, the present invention is not limited to the embodiment described above.

For example, in the above-mentioned embodiment, the ball screw device 31 is employed for the motion conversion mechanism part B, but the present invention can be applied to the electric actuator employing a screw device in which the balls 34 and the deflectors 35 are omitted for the motion conversion mechanism part B. However, in consideration of operability and the like of the screw shaft 33, it is preferred that the ball screw device 31 be employed for the motion conversion mechanism part B.

Further, as the thrust bearing to be arranged adjacent to the nut member 32 on another side in the axial direction, a rolling bearing other than the needle roller bearing 47, for example, a cylindrical roller bearing can be employed. However, in consideration of ability to support the thrust load and the axial dimension of the bearing, the needle roller bearing 47 is preferred.

Moreover, although the planetary gear speed reducer 10 is provided in the motion conversion mechanism part B in the above-mentioned embodiment, a speed reducer other than the planetary gear speed reducer 10 may be employed as the speed reducer.

Moreover, the speed reducer such as the planetary gear speed reducer 10 does not always need to be provided, and may be omitted when the speed reducer is not necessary. When the planetary gear speed reducer 10 is omitted, the rotor 24 (rotor inner 26) of the motor 25 and the nut member 32 of the ball screw device 31 may directly be coupled to each other in a torque transmittable manner. However, with such a configuration, it is necessary to employ members having different shapes for at least one of the rotor inner 26 and the nut member 32. Therefore, when the planetary gear speed reducer 10 is omitted, it is preferred that an intermediate member in a cylindrical shape be arranged between the inner peripheral surface 26d of the rotor inner 26 and the outer peripheral surface 32b of the nut member 32, and that an outer peripheral surface and an inner peripheral surface of the intermediate member be coupled respectively to the inner peripheral surface 26d of the rotor inner 26 and the outer peripheral surface 32b of the nut member 32 in a torque transmittable manner (not shown). As a result, even when the planetary gear speed reducer 10 is omitted, at least one of the motor part A (motor 25) and the ball screw device 31 can be a standardized component, and an increase in cost can thus be suppressed.

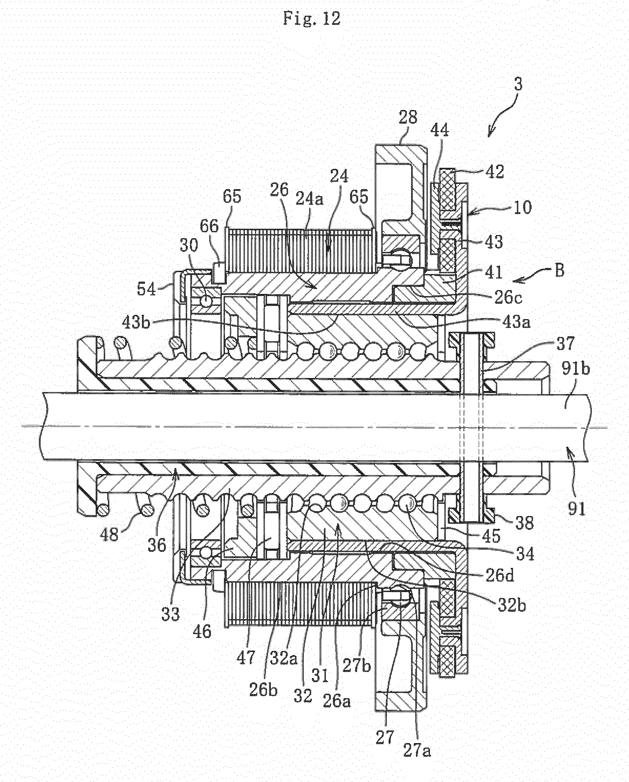

Moreover, for example, as illustrated in FIG. 12, an elastic member (compression coil spring in the illustrated example) 48 in a compressed state in the axial direction may be arranged between a flange portion formed on the end portion of (the inner member 36 arranged on the inner periphery of) the screw shaft 33 on the another side in the axial direction and the nut member 32 (the needle roller bearing 47 arranged adjacent to the nut member 32 on the another side in the axial direction in the illustrated example).

With such a configuration, the screw shaft 33 can always be urged toward the another side (original point side) in the axial direction by a spring force of the compression coil spring 48 under a state in which the motion conversion mechanism part B is accommodated in the inner periphery of the housing 2. In this case, there is an advantage in that, for example, when drive power is not appropriately supplied to the motor 25, the screw shaft 33 can automatically be returned to the original point, thereby being capable of reducing a risk of adverse effect exerted to the operation of an object to be operated (not shown) as much as possible. Moreover, when the compression coil spring 48 is provided in the above-mentioned mode, a preload can be applied to the nut member 32 in the axial direction. As a result, a response lag caused by an operating internal clearance generally formed between the nut member 32 and the screw shaft 33 can be eliminated, thereby being capable of increasing the operability of the screw shaft 33. FIG. 12 is a view for illustrating such a configuration that the compression coil spring 48 is arranged in the motion conversion mechanism part B of the first actuator unit 3 in the electric actuator 1 illustrated in FIG. 1. As a matter of course, the compression coil spring 48 may be arranged in the motion conversion mechanism part B of the second actuator unit 4.

Moreover, although the above-mentioned electric actuator 1 is formed through arraying in the axial direction and coaxially arranging the first and second actuator units 3 and 4 having the same configurations/structures in the motor part A, the motion conversion mechanism part B, and the terminal part D. However, both the actuator units 3 and 4 may have different configurations/structures in the motor part A and the like without departing from the spirit of the present invention.

Further, the present invention may be applied to a case in which three or more actuator units each comprising the motor part A, the motion conversion mechanism part B, and the terminal part D are arrayed in the axial direction and arranged coaxially.

The present invention is not limited to the above-mentioned embodiments. As a matter of course, the present invention may be carried out in various modes without departing from the spirit of the present invention. The scope of the present invention is defined in claims, and encompasses equivalents described in claims and all changes within the scope of claims.

### Reference Signs List

- 1: electric actuator
- 2: housing
- 3: first actuator unit
- 4: second actuator unit
- 10: planetary gear speed reducer (speed reducer)
- 20: casing
- 23: stator
- 24: rotor
- 25: motor
- 26: rotor inner (hollow rotary shaft)
- 29: cover
- 31: ball screw device
- 32: nut member
- 33: screw shaft
- 33b: through hole
- 34: ball
- 39: actuator head (operation part)
- 47: needle roller bearing (thrust bearing)
- 50: terminal main body
- 50A: tubular portion
- 50B: disc-shaped portion
- 50c: opening portion
- 80: intermediate casing
- 91: flanged shaft member (operation part)
- A: motor part
- B: motion conversion mechanism part
- C: operation part
- D: terminal part

## Claims

1. An electric actuator, comprising:
a motor part configured to drive upon receiving supply of power;
a motion conversion mechanism part configured to convert a rotary motion of the motor part into a linear motion to output the linear motion; and
a housing configured to accommodate the motor part and the motion conversion mechanism part,
wherein the motion conversion mechanism part comprises:
a screw shaft arranged coaxially with a rotation center of a rotor of the motor part; and
a nut member rotatably fitted to an outer periphery of the screw shaft,
wherein an operation part mounted to the screw shaft is configured to operate an object to be operated in an axial direction through a linear motion of the screw shaft in the axial direction along with a rotation of the nut member upon receiving a rotary motion of the rotor,
wherein the housing comprises a plurality of members coupled to one another in the axial direction,
wherein a terminal part configured to hold an electrical component comprises a tubular portion sandwiched by the members forming the housing from both sides in the axial direction, and has an opening portion formed in in the tubular portion and configured to cause an inside and an outside of the housing to communicate with each other, and
wherein the screw shaft is formed into a hollow shape having a through hole extending in the axial direction.

2. The electric actuator according to claim 1, wherein at least a part of a stator of the motor part is fitted to the tubular portion.

3. The electric actuator according to claim 1 or 2,
wherein the rotor comprises a hollow rotary shaft, which has the nut member arranged on an inner periphery thereof, and is supported rotatably with respect to the housing by rolling bearings arranged at two positions apart from each other in the axial direction, and
wherein the hollow rotary shaft comprises an inner raceway surface of one of the two rolling bearings.

4. The electric actuator according to claim 3, wherein the inner raceway surface is arranged within an axial width of the nut member.

5. The electric actuator according to any one of claims 1 to 4, wherein the motion conversion mechanism part comprises a speed reducer configured to reduce a speed of the rotation of the rotor, and transmit the rotation to the nut member.

6. The electric actuator according to claim 5, wherein the speed reducer is a planetary gear speed reducer.

7. The electric actuator according to any one of claims 1 to 6, wherein two or more actuator units each comprising the motor part, the motion conversion mechanism part, and the terminal part are arrayed in the axial direction and are coaxially arranged.
